(19) Europäisches Patentamt
European Patent Office
Office européen des brevets

(11) **EP 4 730 540 A1**

(12) **EUROPEAN PATENT APPLICATION**
published in accordance with Art. 153(4) EPC

(43) Date of publication:
**22.04.2026 Bulletin 2026/17**

(21) Application number: **24832446.9**

(22) Date of filing: **26.06.2024**

(51) International Patent Classification (IPC):
$H01M\ 50/46$ (2021.01)    $H01M\ 50/446$ (2021.01)
$H01M\ 50/449$ (2021.01)    $H01M\ 50/414$ (2021.01)
$H01M\ 50/411$ (2021.01)    $H01M\ 50/443$ (2021.01)
$H01M\ 10/052$ (2010.01)

(52) Cooperative Patent Classification (CPC):
Y02E 60/10

(86) International application number:
**PCT/KR2024/008921**

(87) International publication number:
**WO 2025/005668 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.06.2023 KR 20230082152**

(71) Applicant: **LG Chem, Ltd.**
**Seoul 07336 (KR)**

(72) Inventors:
• LEE, Joo-Sung
 Daejeon 34122 (KR)
• PARK, Seong-Eun
 Daejeon 34122 (KR)
• LEE, Young-Dong
 Daejeon 34122 (KR)

(74) Representative: **Hoffmann Eitle**
**Patent- und Rechtsanwälte PartmbB**
**Arabellastraße 30**
**81925 München (DE)**

(54) **SEPARATOR FOR ELECTROCHEMICAL DEVICE AND ELECTROCHEMICAL DEVICE COMPRISING SAME**

(57) The present disclosure provides a separator for an electrochemical device and an electrochemical device including the same, the separator capable of, by securing adhesion between the separator and an electrode, achieving an electrode adhesive layer with low resistance while improving lifetime properties, and improving electrolyte liquid impregnation.

The separator for an electrochemical device according to one embodiment of the present disclosure includes a porous layer; and an electrode adhesive layer formed on at least one surface of the porous layer, wherein the electrode adhesive layer includes a particle-type binder in a disk shape with a convex central portion, and the particle-type binder has a short axis of 50 nm to 500 nm.

FIG. 1

## Description

### Technical Field

The present disclosure relates to a separator for an electrochemical device, and an electrochemical device including the same.

This application claims priority to Korean Patent Application No. 10-2023-0082152 filed on June 26, 2023, the disclosure of which is incorporated herein by reference in its entirety.

### Background Art

Interest in energy storage technology is increasingly growing recently. As the field of application expands to energy of mobile phones, camcorders, notebook PCs and even electric vehicles, efforts on research and development for electrochemical devices are increasingly concretized. Among these, development of secondary batteries, which are rechargeable energy storage devices based on an electrochemical principle, is a focus of attention. In developing such batteries, research and development on new electrode and battery designs to improve capacity density and specific energy is recently underway.

Among these, demand for lithium secondary batteries as an energy source is rapidly increasing as technological development and demand for mobile devices increase. Recently, the use of lithium secondary batteries as power sources for electric vehicles (EV) and hybrid electric vehicles (HEV) is realized, making them a key growth driver for the secondary battery market.

Such a secondary battery has a structure in which a rechargeable electrode assembly with a structure of positive electrode/separator/negative electrode is mounted in a battery case, and the electrodes of positive electrode and negative electrode are prepared by applying an electrode active material and the like on one or both surfaces of a metal current collector, followed by drying and rolling.

Among these, the separator is one of critical factors determining a lifetime of a secondary battery, and performs a role of electrically insulating the positive electrode and the negative electrode. For use as a separator, the separator preferably has high ion permeability such as smooth passage of an electrolyte liquid, excellent mechanical strength, and stability in an electrolyte liquid.

However, separators commonly used in the art have insufficient adhesion to an electrode due to their material properties, causing a problem of partial lifting or wrinkling at the interface depending on the manufacturing process. In order to solve this problem, an adhesive layer is formed by coating a mixture of a binder polymer on a porous substrate, however, in this case, additional formation of the adhesive layer makes it difficult for an electrolyte liquid to pass through, and there is a problem of deteriorating battery output and cycle properties since the adhesive layer itself acts as resistance.

### DISCLOSURE

### Technical Problem

Accordingly, the present disclosure aims to resolve the problems described above, and is directed to providing a separator for an electrochemical device capable of improving lifetime properties by securing adhesion between the separator and an electrode, obtaining an electrode adhesive layer having low resistance and improving electrolyte liquid impregnation, and an electrochemical device including the same.

### Technical Solution

The inventors of the present disclosure have found that the above-described problems can be resolved through the following separator for an electrochemical device and electrochemical device including the same.

According to a first embodiment, there is provided a separator for an electrochemical device, the separator including:

> a porous layer; and an electrode adhesive layer formed on at least one surface of the porous layer,
> wherein the porous layer includes a porous polymer substrate and a porous coating layer formed on at least one surface of the porous polymer substrate,
> the porous coating layer includes a binder polymer and an inorganic filler,
> the electrode adhesive layer includes a particle-type binder in a disk shape with a convex central portion, and
> the particle-type binder has a short axis of 50 nm to 500 nm.

According to a second embodiment, in the first embodiment,
the electrode adhesive layer further includes a swelling agent capable of swelling the particle-type binder.
According to a third embodiment, in the second embodiment,
the swelling ratio of the particle-type binder calculated by the following Equation 1 ranges from 120% to 500%.
[Equation 1]

Swelling ratio (%)=[weight after swelling]/[initial weight]x100

According to a fourth embodiment, in the second or third embodiment,
the swelling agent includes a linear carbonate-based compound, a cyclic carbonate-based compound, an ester-based compound, or two or more thereof.
According to a fifth embodiment, in any one of the second to fourth embodiments,
the swelling agent is solid or liquid at room temperature.
According to a sixth embodiment, in any one of the second to fifth embodiments,
the swelling agent has solubility of 10 g/100 mL or greater in water.
According to a seventh embodiment, in any one of the second to sixth embodiments,
the swelling agent is ethylene carbonate (EC), dimethyl carbonate (DMC) or a mixture thereof.
According to an eighth embodiment, in any one of the first to seventh embodiments,
the particle-type binder polymer includes a polyvinylidene fluoride (PVdF)-based polymer, a styrene-butadiene-based polymer, an acrylic polymer, or two or more thereof.
According to a ninth embodiment, in any one of the first to eighth embodiments,
the porous layer has a surface contact angle of 30 degrees or less with water.
According to a tenth embodiment, in any one of the first to ninth embodiments,
the particle-type binder is not substantially present on the surface of the porous polymer substrate.
According to an eleventh embodiment, in any one the first to tenth embodiments,
the surface of the porous polymer substrate has a peak area ratio of 0.1 or less, and the peak area ratio is calculated according to the following Equation 2.

[Equation 2]

Peak area ratio=$I_{\text{functional group}}/I_{\text{porous polymer substrate}}$

In Equation 2, $I_{\text{porous polymer substrate}}$ represents an area of the peak for the SP3 C-H bond in an IR spectrum for the surface of the porous polymer substrate, for example, the peak present between regions of 2850 cm$^{-1}$ to 2950 cm$^{-1}$, and $I_{\text{functional group}}$ represents an area of the peak for a region representing a specific bond present in the particle-type binder polymer in an IR spectrum for the surface of the porous polymer substrate, and the peak corresponds to a peak of the IR spectrum for the electrode adhesive layer component present on the surface of the porous polymer substrate.
According to a twelfth embodiment,

there is provided an electrochemical device including: a positive electrode; a negative electrode; and a separator interposed between the positive electrode and the negative electrode,
wherein the separator is the separator of any one of the first to eleventh embodiments.

According to a thirteenth embodiment, in the twelfth embodiment,
the electrochemical device is a lithium secondary battery.

Advantageous Effects

A separator according to the present disclosure has excellent adhesion to an electrode. Due to such properties, there is no partial lifting or wrinkling at an interface between the separator and an electrode, and safety is improved even under a high temperature condition.
In addition, an electrode adhesive layer formed on one surface of the separator does not interfere with ion conduction between the electrode and a porous layer, resulting in a low increase rate in resistance and excellent lifetime properties.

In addition, as the electrode adhesive layer includes a particle-type binder having a prescribed shape, pores can be formed between the binder particles and the area of application can be controlled, improving electrolyte liquid impregnation.

**Brief Description of Drawings**

Drawings accompanying the present specification illustrate preferred examples of the present disclosure, and serve to aid in further understanding of technical ideas of the present disclosure together with the description of the invention provided above, and therefore, the present disclosure should not be construed as being limited to matters described in these drawings.

FIG. 1 is an SEM image showing a cross-section of a separator according to Example 2.
FIG. 2 is an SEM image showing a surface of a separator according to Example 4.

**Mode for Invention**

Hereinafter, the present disclosure will be described in detail. Prior to this, terms or words used in the present specification and the claims should not be interpreted limitedly to common or dictionary meanings, and need to be interpreted as meanings and concepts corresponding to technical ideas of the present disclosure based on a principle in which the inventors may suitably define the concept of terms in order to describe their own invention in the best possible way. Accordingly, constitutions described in the embodiments described in the present specification are just most preferred one embodiment of the present disclosure and do not entirely represent technical ideas of the present disclosure, and therefore, it needs to be understood that there may be various equivalents and modified examples that may replace these at the time of filing.

Throughout the present specification, a description of a certain part "including" or "being provide with" a certain component means that it may further include or be further provided with other components, and does not exclude other components unless particularly stated on the contrary.

Throughout the present specification, a description of "A and/or B" means "A or B, or both".

The inventors of the present disclosure have developed a separator capable of, by including an electrode adhesive layer that includes a prescribed particle-type binder on the outermost layer of the separator, securing adhesion between the separator and an electrode, and at the same time, achieving low resistance and improving electrolyte liquid impregnation in a secondary battery.

A separator for an electrochemical device according to one embodiment of the present disclosure includes: a porous layer; and an electrode adhesive layer formed on at least one surface of the porous layer, wherein the electrode adhesive layer includes a particle-type binder in a disk shape with a convex central portion, and the particle-type binder has a short axis of 50 nm to 500 nm.

Electrode Adhesive Layer

The electrode adhesive layer is formed on at least one surface of the porous layer, and may perform a role of adhering the separator and an electrode.

The electrode adhesive layer includes a particle-type binder in a disk shape with a convex central portion, and the particle-type binder has a short axis of 50 nm to 500 nm. Specifically, the particle-type binder may have a short axis of 100 nm to 500 nm, 120 nm to 480 nm, 140 nm to 480 nm, 160 nm to 480 nm, 180 nm to 480 nm, 220 nm to 480 nm, or 140 nm to 250 nm. The short axis of the particle-type binder may be calculated by cutting a cross-section of the separator, then obtaining an image by observing the cut cross-section using a scanning electron microscope (SEM) or optical microscope, and then averaging the measured lengths.

By including the particle-type binder having the above-mentioned shape, pores and/or passages may be formed in the electrode adhesive layer. Accordingly, Li ions readily migrate, resulting in low increase rate in resistance and excellent lifetime properties. In addition, the particle-type binder does not penetrate into the pores of the porous layer, thereby not affecting porosity of the porous layer, and the content of the adhesive layer binder may be minimized in the composite separator. Specifically, since the particle-type binder does not penetrate into the pores in the porous coating layer, the particle-type binder is not substantially present on the surface of the porous polymer substrate, and despite the formation of the adhesive layer, the increase rate in resistance is low, and electrolyte liquid impregnation is excellent.

The particle-type binder may have a long axis ranging from 100 nm to 1000 nm.

In the present disclosure, the 'short axis' refers to the shortest diameter passing through the center of the particle, and the 'long axis' refers to the longest diameter passing through the center of the particle.

The particle-type binder may have an aspect ratio ranging from 0.7 to 1.0, 0.7 to 0.99, 0.7 to 0.98, 0.7 to 0.96, 0.7 to 0.88, 0.7 to 0.84, or 0.84 to 0.99. The aspect ratio refers to a ratio of the shortest diameter of the particle to the longest diameter of the particle, and may be calculated as 'short axis length/long axis length'.

The particle-type binders may bind to each other, and specifically, may have a form in which the short axis and/or the long axis of the particle are connected to adjacent particles.

The particle-type binder may include a polyvinylidene fluoride (PVdF)-based polymer, a styrene-butadiene-based polymer, an acrylic polymer, or two or more thereof.

For example, the polyvinylidene fluoride (PVdF)-based polymer may include a polyvinylidene fluoride homopolymer, polyvinylidene fluoride-co-hexafluoropropylene, polyvinylidene fluoride-co-trichloroethylene, polyvinylidene fluoride-co-chlorotrifluoroethylene and the like, and may include at least one selected from among these. In addition thereto, a PVdF-based polymer including a vinylidene fluoride repeating unit (A) and another repeating unit (B) copolymerizable with the repeating unit may be used.

The styrene-butadiene-based polymer may refer to a polymer containing a styrene monomer-derived repeating unit and a butadiene monomer repeating unit.

The acrylic polymer may refer to a polymer compound including a polymerization unit derived from a (meth) acrylate monomer, or a polymer compound including a repeating unit of a monomer in which some of substituents include a (meth)acryloyl group. For example, the acrylic binder resin may include an acrylic acid alkyl ester and/or a methacrylic acid alkyl ester having an alkyl group with 1 to 8 carbon atoms as a monomer. Examples of the acrylic acid alkyl ester may include at least one selected from among methyl acrylate, ethyl acrylate, isopropyl acrylate, n-butyl acrylate, isobutyl acrylate, cyclohexyl acrylate, and 2-ethylhexyl acrylate. In addition, examples of the methacrylic acid alkyl ester may include at least one selected from among methyl methacrylate, ethyl methacrylate, isopropyl methacrylate, n-butyl methacrylate, isobutyl methacrylate, cyclohexyl methacrylate, and 2-ethylhexyl methacrylate. However, the acrylic acid alkyl ester and the methacrylic acid alkyl ester are not particularly limited thereto.

The electrode adhesive layer may further include a swelling agent capable of swelling the particle-type binder.

The swelling agent may melt the surface of the particle-type binder in the electrode adhesive layer, thereby allowing the particle-type binder to have a disk shape with a convex central portion. Specifically, in the case of a particle-type binder initially having a spherical shape, the particle surface is melted on the left and right due to the introduction of the swelling agent, while the spherical shape remains in the central portion, and therefore, the particle-type binder may have a disk shape with a convex central portion in the electrode adhesive layer.

The swelling agent may include a linear carbonate-based compound, a cyclic carbonate-based compound, an ester-based compound, or two or more thereof.

Specific examples of the linear carbonate-based compound may include dimethyl carbonate (DMC), diethyl carbonate (DEC), dipropyl carbonate, ethylmethyl carbonate (EMC), methylpropyl carbonate, ethylpropyl carbonate, or the like.

Specific examples of the cyclic carbonate-based compound may include ethylene carbonate (EC), propylene carbonate (PC), 1,2-butylene carbonate, 2,3-butylene carbonate, 1,2-pentylene carbonate, 2,3-pentylene carbonate, vinylene carbonate, or a halide thereof.

Specific examples of the ester-based compound may include methyl acetate, ethyl acetate, propyl acetate, methyl propionate, ethyl propionate, γ-butyrolactone, γ-valerolactone, γ-caprolactone, σ-valerolactone, ε-caprolactone or the like. However, the ester-based compound is not particularly limited thereto.

Specifically, the swelling agent may be dimethyl carbonate (DMC), ethylene carbonate (EC), or a mixture thereof.

In addition, according to one embodiment of the present disclosure, the swelling agent may have solubility of 10 g/100 mL or greater in water. The swelling agent is preferably soluble in water, a solvent, at room temperature. The swelling agent may be dissolved in a water-dispersible binder to perform a swelling function during the coating separator manufacturing, having an advantage of making the manufacturing process simple.

In addition, the swelling agent may be solid or liquid at room temperature. In the present specification, room temperature refers to a temperature in the range of about 18°C to 30°C.

Meanwhile, the particle-type binder may be swollen by the swelling agent, and herein, the particle-type binder may have a swelling ratio ranging from 120% to 500%, or 150% to 350%. Herein, the swelling ratio may be calculated by the following Equation 1. After the particle-type binder is brought into contact with the swelling agent, the surface of the particle-type binder may be melted down, however, the entire particle other than the surface may be swollen by the swelling agent and/or an electrolyte liquid present in a battery.

[Equation 1]

$$\text{Swelling ratio } (\%) = [\text{weight after swelling}]/[\text{initial weight}] \times 100$$

The swelling weight may be measured by dissolving $LiPF_6$ to have a concentration of 1.0 M in a mixed solvent including ethylene carbonate and ethylmethyl carbonate in a volume ratio of 7:3 at room temperature (25°C), then introducing the particle-type binder thereto to allow sufficient swelling.

According to one specific embodiment of the present disclosure, when the porous layer includes a porous polymer substrate and a porous coating layer formed on at least one surface of the porous polymer substrate, the particle-type binder may not be substantially present on the surface of the porous polymer substrate. As described above, the particle-type binders bind to each other in the electrode adhesive layer, preventing the particle-type binder from penetrating into the porous layer. In other words, since the particle-type binder cannot pass through the inside of the porous coating layer, the particle-type binder is not present on the surface of the porous polymer substrate.

Absence of the particle-type binder may be identified by analyzing the surface of the porous polymer substrate through an IR spectrum. Specifically, the surface of the porous polymer substrate has a peak area ratio of 0.1 or less, and the peak area ratio may be calculated according to the following Equation 2.

[Equation 2]

$$\text{Peak area ratio} = I_{\text{functional group}}/I_{\text{porous polymer substrate}}$$

In Equation 2, $I_{\text{porous polymer substrate}}$ represents an area of the peak for the SP3 C-H bond in an IR spectrum for the surface of the porous polymer substrate, for example, the peak present between regions of 2850 $cm^{-1}$ to 2950 $cm^{-1}$, and $I_{\text{functional group}}$ represents an area of the peak for a region representing a specific bond present in the particle-type binder polymer in an IR spectrum for the surface of the porous polymer substrate, and the peak corresponds to a peak of the IR spectrum for the electrode adhesive layer component present on the surface of the porous polymer substrate.

For example, when using a PVDF-based binder as the particle-type binder polymer included in the electrode adhesive layer, the area of the peak present between, for example, regions of 1000 $cm^{-1}$ to 1400 $cm^{-1}$ may be the $I_{\text{functional group}}$ value as the peak for the C-F bond. In addition, when using an acrylic binder as the particle-type binder polymer included in the electrode adhesive layer, the area of the peak present between regions of, for example, 1500 $cm^{-1}$ to 1800 $cm^{-1}$ may be the $I_{\text{functional group}}$ value as the peak for the C=O bond.

Porous Layer

The porous layer is not limited as long as it has a structure having pores, and includes: a porous polymer substrate; and a porous coating layer formed on at least one surface of the porous polymer substrate.

In one embodiment of the present disclosure, the porous layer may have a surface contact angle of 30 degrees or less with water.

By having a contact angle in the above-mentioned range, coating processability of the electrode adhesive layer formed on the porous layer may be improved. The surface contact angle with water is an angle measured between the surface of the porous layer and water at 25°C using a contact angle meter. Specifically, the surface contact angle with water may be an angle measured between the surface of the porous coating layer and water.

As the porous polymer substrate, planar porous polymer substrates commonly used in secondary batteries such as porous polymer film substrates or porous nonwoven fabric substrates formed with various polymers may all be used.

The porous polymer film substrate may be a porous polymer film formed with an olefin polymer such as polyethylene or polypropylene, and such a porous polymer film substrate formed with an olefin polymer exhibits a shut-down function at a temperature of, for example, 80°C to 130°C.

Herein, the porous polymer film may be formed with an olefin polymer-based polymer such as polyethylene including high-density polyethylene, linear low-density polyethylene, low-density polyethylene or ultra-high molecular weight polyethylene, polypropylene, polybutylene or polypentene either alone or as a mixture of two or more thereof, or a derivative thereof.

Representative examples of the porous polymer film formed with an olefin polymer that may be used as such a porous polymer film may include wet polyethylene series (Asahi-Kasei E-Materials, Toray, SK IE Technology, Shanghai Energy, Sinoma, Entek), dry polypropylene series (Shenzhen Senior, Cangzhou Mingzhu), dry polypropylene/polyethylene multilayer structure series (Polypore, Ube), and the like, but are not limited thereto.

In addition, the porous polymer film substrate may also be prepared by being molded into a film shape using various polymers such as polyester in addition to the olefin polymer. In addition, the porous polymer film substrate may be formed to have a structure in which two or more film layers are laminated, and each of the film layers may be formed with a polymer such as the above-described olefin polymer or polyester either alone or as a mixture of two or more thereof.

In addition, the porous polymer film substrate and the porous nonwoven fabric substrate may be formed with, in addition to the olefin polymers described above, polyester (polyethylene terephthalate, polybutylene terephthalate, polyethylene naphthalene or the like), polyacetal, polyamide, polycarbonate, polyimide, polyetheretherketone, polyethersulfone, polyphenylene oxide or polyphenylene sulfide either alone or as a mixture thereof.

The thickness of such a porous polymer substrate is not particularly limited, but may be 1 $\mu$m or greater, 3 $\mu$m or greater, 15 $\mu$m or less, or 10 $\mu$m or less. When the thickness satisfies such a range, the problem of the porous polymer substrate acting as a resistive layer may be improved while maintaining mechanical properties.

Pore size and porosity of the porous polymer substrate are not particularly limited, however, the porosity may range from 10% to 95%, and the pore size (diameter) may be 0.1 $\mu$m to 50 $\mu$m. When the pore size and the porosity satisfy such ranges, the problem of the porous polymer substrate acting as a resistive layer may be prevented, and mechanical properties may be maintained.

The porous coating layer may be formed on at least one surface of the porous polymer substrate, and includes a binder polymer and an inorganic filler. The porous coating layer functions as an isolation layer preventing a short-circuit between a positive electrode and a negative electrode as one component layer of the separator, and at the same time, may prevent the porous polymer substrate from being in direct contact with lithium metal.

The porous coating layer may have porosity ranging from 5% to 95%, however, the porosity is not limited thereto. The porous coating layer may have a thickness of 1 $\mu$m or greater, 3 $\mu$m or greater, 15 $\mu$m or less, or 10 $\mu$m or less. When the thickness satisfies such a range, heat resistance is improved, an occurrence of short-circuit is suppressed, a thinner separator is achieved, and at the same time, insulation properties may be excellent.

In the porous coating layer, the inorganic fillers are bound to each other by the binder polymer while being in contact with each other after filling the layer. This creates an interstitial volume between the inorganic fillers, and the interstitial volume between the inorganic fillers becomes an empty space and forms pores. In other words, the binder polymer attaches the inorganic fillers to each other so that these remain bound to each other, and for example, the binder polymer may connect and fix between the inorganic fillers. In addition, the pores of the porous coating layer are pores formed as the interstitial volume between the inorganic fillers becomes an empty space, and this may be a space limited by the inorganic fillers that are substantially in contact with each other in a closed packed or densely packed structure by the inorganic fillers.

The inorganic filler allows the formation of empty space between the inorganic fillers, thereby performing a role of forming micropores, while also serving as a kind of a spacer capable of maintaining the physical form. The formed organic/inorganic composite porous film may have excellent heat resistance since the physical properties do not change generally even at a high temperature of 200°C or higher.

Accordingly, in a lithium secondary battery including the separator, it is difficult for both electrodes to be completely short-circuited due to the porous coating layer even when the porous polymer substrate is ruptured inside the battery due to an extreme condition caused by internal or external factors such as high temperature, overcharge and external impact. Even if the short-circuit occurs, the short-circuited area is suppressed from expanding significantly, thereby improving battery safety.

The inorganic filler is not particularly limited as long as it is electrochemically stable. In other words, the inorganic filler that may be used in the present disclosure is not particularly limited as long as it does not undergo oxidation and/or reduction reaction in an operating voltage range (for example, 0 V to 5 V based on Li/Li+) of a battery in which it is used. Examples of such an inorganic filler may include alumina ($Al_2O_3$), fumed alumina, aluminum hydroxide ($Al(OH)_3$), magnesium hydroxide ($Mg(OH)_2$), boehmite ($AlOOH$), barium titanate ($BaTiO_3$), or a mixture of two or more thereof.

The inorganic filler may preferably have an average particle diameter (D50) ranging from 20 nm to 700 nm to form a porous coating layer with uniform thickness and to have proper porosity thereof. Specifically, the average particle diameter (D50) may range from 100 nm to 500 nm. When the average particle diameter (D50) of the inorganic filler satisfies such a range, dispersibility of a slurry for the porous coating layer is maintained, making it easy to control properties of the separator, and problems of reducing mechanical properties caused by an excessive increase in the separator thickness or an occurrence of internal short-circuit during charge and discharge of a battery caused by an excessively large pore size may be prevented. In addition, packing density increases, contributing to a thermal shrinkage rate, and excellent high heat resistance may be obtained in the above-mentioned particle size range.

In the present disclosure, the average particle diameter (D50) of the inorganic filler may be defined as a particle diameter based on 50% in the particle diameter distribution. In the present disclosure, the average particle diameter (D50) of the inorganic filler may be measured by, for example, electron microscope observation using a scanning electron microscope (SEM), a field emission scanning electron microscope (FE-SEM) or the like, or using a laser diffraction method. When measured using a laser diffraction method, more specifically, the inorganic filler is dispersed in a dispersion medium, then the result is introduced to a commercially available laser diffraction particle size measuring device (for example, Microtrac MT 3000) and irradiated with ultrasonic waves of about 28 kHz at an output of 60 W, and then an average particle diameter (D50) based on 50% in the particle diameter distribution in the measuring device may be calculated.

In addition, the inorganic filler may be a primary particle, which is a single particle, or a secondary particle formed from aggregates of primary particles.

The binder polymer is not particularly limited as long as it is capable of providing binding strength between the inorganic fillers, binding strength between the porous coating layer and the porous polymer substrate, and binding strength between the porous coating layer and an electrode. Examples of the binder resin may include any one binder polymer selected from the group consisting of polyvinylidene fluoride-co-hexafluoropropylene (PVdF), polyvinylidene fluoride-co-trichloroethylene, polymethyl methacrylate, polybutyl acrylate, polyacrylonitrile, polyvinyl pyrrolidone, polyvinyl acetate, polyethylene-co-vinyl acetate, polyethylene oxide, polyarylate, cellulose acetate, cellulose acetate butyrate, cellulose acetate propionate, cyanoethyl pullulan, cyanoethyl polyvinyl alcohol, cyanoethyl cellulose, cyanoethyl sucrose, pullulan and carboxyl methyl cellulose, or a mixture of two or more thereof, but are not limited thereto. In addition, heat-resistant polymers with high Tm (150°C or higher or 180°C or higher) such as polyacetal, polysulfone (PSF), polyethersulfone (PES), polyetherimide (PEI), polyphenylene sulfide (PPS), polyetheretherketone (PEEK), polyacrylamide (PAAm), polyarylate (PA), polycarbonate, polyamideimide (PAI), polyimide (PI), polyamide, wholly aromatic polyamide (aramid), polyphenylene oxide, polybutylene terephthalate, polyethylene terephthalate, polyetherketone, or a mixture of two or more thereof may be used, however, the binder polymer is not limited thereto.

The content of the binder polymer may be 0.1% to 10% with respect to the total weight of the porous coating layer. Specifically, the content of the binder polymer may be 0.1% or greater, 1% or greater, 3% or greater, 10% or less, or 8% or less with respect to the total weight of the porous coating layer. Including the binder polymer in the above-mentioned content range has advantages in that heat resistance properties may be improved and resistance of the separator may be reduced as well, and energy density of a battery may increase.

A secondary battery according to the present disclosure includes: a positive electrode; a negative electrode; and a separator interposed between the positive electrode and the negative electrode. The electrode to be used in the present disclosure is not particularly limited, and may be manufactured in a form in which an electrode active material is bound to an electrode current collector according to a common method known in the art.

Among the electrode active materials, nonlimiting examples of the positive electrode active material may include common positive electrode active materials that may be used in a positive electrode of an existing lithium secondary battery. Particularly, lithium manganese oxide, lithium cobalt oxide, lithium nickel oxide, lithium iron oxide, lithium composite oxide that is a combined form thereof, or the like, is preferably used.

Nonlimiting examples of the negative electrode active material may include common negative electrode active materials that may be used in a negative electrode of an existing lithium secondary battery. Particularly, lithium metal or lithium alloy, or lithium adsorbing materials such as carbon, petroleum coke, activated carbon, graphite or other carbonaceous materials, or the like, are preferred.

Nonlimiting examples of the positive electrode current collector may include foil made of aluminum, nickel, a combination thereof, or the like, and nonlimiting examples of the negative electrode current collector may include foil made of copper, gold, nickel, a copper alloy, a combination thereof, or the like.

Hereinafter, the present disclosure will be described in detail with reference to examples in order to specifically describe the present disclosure. However, examples according to the present disclosure may be modified to various different forms, and the scope of the present disclosure should not be construed as being limited to the examples described below. The examples of the present disclosure are provided in order to more fully describe the present disclosure to those having average knowledge in the art.

Example

[Manufacture of Separator]

Example 1

1) As a porous polymer substrate, a polyethylene substrate film (B09PJ1 of Toray Industries Inc., thickness: 9 $\mu$m) was prepared.

2) On both sides of the polyethylene substrate, a slurry in which alumina $Al_2O_3$ (Daehan Ceramics Co., Ltd., ALK-S1), an acrylic binder polymer (Toyo Ink, CSB-400) and a dispersant CMC (GLChem, SG-L02) (96:2:2) are mixed in water, a solvent, was applied to a thickness of 2 um each to prepare a ceramic coating (porous coating layer) separator.

3) On one surface of the ceramic coating separator, a waterborne emulsion, in which 97 wt% of water, a solvent, and 3 wt% of acrylic polymer particles (ZEON Corporation, trade name AFL, BM2570, D50: 500 nm, aspect ratio=0.96) are mixed, was applied and dried to form an electrode adhesive layer. After forming the adhesive layer, the AFL particles had a short axis length of 480 nm.

Example 2

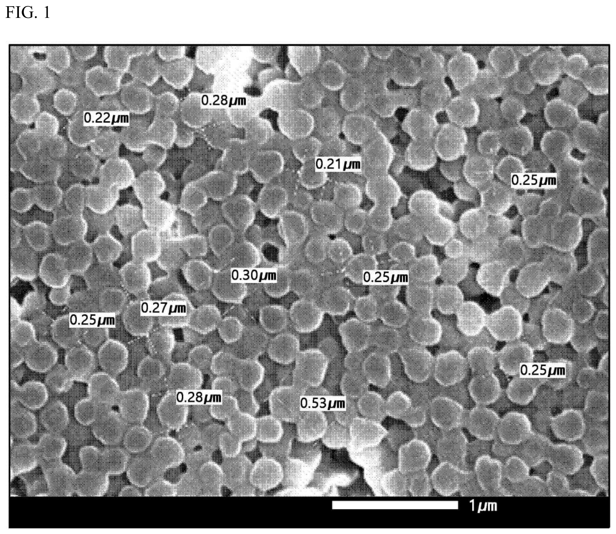

On one surface of the ceramic coating separator prepared in 2) of Example 1, a waterborne emulsion, in which 97 wt% of water, a solvent, and 3 wt% of PVDF-HFP particles (Arkema, LBG4330LX, D50: 200 nm, aspect ratio=0.98) are mixed, was applied and dried to form an electrode adhesive layer. After forming the adhesive layer, the PVDF-HFP particles had a short axis length of 180 nm. An SEM image of the surface of the manufactured separator is shown in FIG. 1.

Example 3

On one surface of the ceramic coating separator prepared in 2) of Example 1, a waterborne emulsion, in which 97 wt% of water, a solvent, and 3 wt% of binder particles are mixed, was applied and dried to form an electrode adhesive layer. Herein, as the binder particles, a mixture of PVDF-HFP particles (Arkema, LBG4330LX, D50: 200 nm, aspect ratio: 0.98) and acrylic particles (Hansol Chemical, HES202, D50: 250 nm, aspect ratio: 0.99) was used. After forming the adhesive layer, the PVDF-HFP particles and the acrylic particles had short axis lengths of 180 nm and 220 nm, respectively.

Example 4

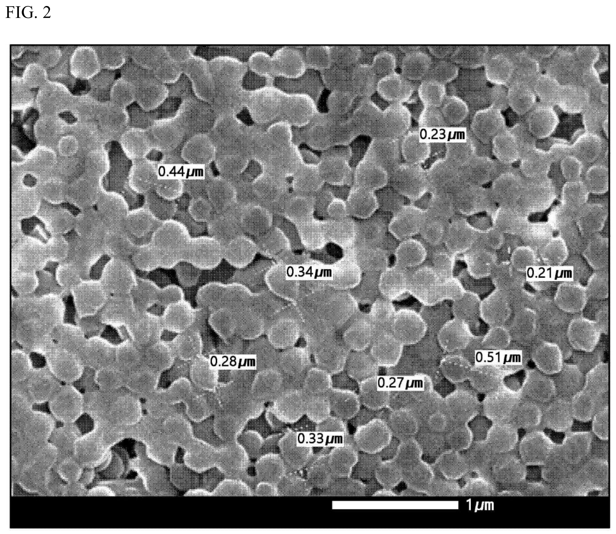

On one surface of the ceramic coating separator prepared in 2) of Example 1, a mixture, in which 97 wt% of water, a solvent, 2.7 wt% of PVDF-HFP particles (Arkema, LBG4330LX, D50: 200 nm, aspect ratio: 0.98) and 0.3 wt% of ethylene carbonate are mixed, was applied and dried to form an electrode adhesive layer. The aspect ratio of the PVDF-HFP particles was reduced to 0.88 after the coating due to the introduction of the swelling agent. After forming the adhesive layer, the PVDF-HFP particles had a short axis length of 160 nm. An SEM image of the surface of the manufactured separator is shown in FIG.2.

Example 5

On one surface of the ceramic coating separator prepared in 2) of Example 1, a mixture, in which 95 wt% of water, a solvent, 2.5 wt% of PVDF-HFP particles (Arkema, LBG4330LX, D50: 200 nm, aspect ratio: 0.98) and 2.5 wt% of dimethyl carbonate are mixed, was applied and dried to form an electrode adhesive layer. The aspect ratio of the PVDF-HFP particles was reduced to 0.84 after the coating due to the introduction of the swelling agent. After forming the adhesive layer, the PVDF-HFP particles had a short axis length of 140 nm.

Comparative Example 1

On one surface of the polyethylene separator of 1) of Example 1, an electrode adhesive layer that is the same as in Example 2 was formed.

Comparative Example 2

On one surface of the ceramic coating separator prepared in 2) of Example 1, a solution in which 2 wt% of PVDF-HFP powder (Arkema, LBG) is dissolved in 98 wt% of acetone was applied and dried to form an electrode adhesive layer.

[Manufacture of Positive Electrode and Negative Electrode]

97% by weight of $LiCoO_2$, 1.5% by weight of carbon black powder as a conductor, and 1.5% by weight of polyvinylidene fluoride (PVdF, Kureha) were mixed and introduced to a N-methyl-2-pyrrolidone solvent, and the mixture was stirred for 30 minutes using a mechanical stirrer to prepare a positive electrode active material slurry.

The slurry was applied on a 20 $\mu$m-thick aluminum current collector to a thickness of about 60 $\mu$m using a doctor blade, dried for 0.5 hours in a hot air dryer at 100°C, and then dried once again for 4 hours under a condition of vacuum and 120°C. The result was roll pressed to manufacture a positive electrode.

96.5% by weight of artificial graphite particles (LC1, Shanshan) having an average particle diameter of 16 $\mu$m, 2.3% by weight of a styrene-butadiene rubber (SBR) binder (ZEON) and 1.2% by weight of carboxyl methyl cellulose (CMC, Daicel) were mixed and then introduced to distilled water, and the mixture was stirred for 60 minutes using a mechanical stirrer to prepare a negative electrode active material slurry. The slurry was applied on an 8 $\mu$m-thick copper current collector to a thickness of about 60 $\mu$m using a doctor blade, dried for 0.5 hours in a hot air dryer at 100°C, and then dried once again for 4 hours under a condition of vacuum and 120°C. The result was roll pressed to manufacture a negative electrode.

Manufacture of Secondary Battery

The separator was interposed between the positive electrode and the negative electrode manufactured above to prepare an electrode assembly, and after embedding the electrode assembly in an electrode case, an organic electrolyte liquid in which 1 M of LiPF$_6$ is dissolved in a mixed solvent of ethylene carbonate (EC)/ethylmethyl carbonate (EMC) in a volume ratio of 3/7 was injected thereinto to manufacture a secondary battery.

Evaluation Results

Properties of each of the separators of the Examples and the Comparative Examples were evaluated, and the results are shown in the following Table 1.

[Table 1]

| | Example 1 | Example 2 | Example 3 | Example 4 | Example 5 | Comparative Example 1 | Comparative Example 2 |
|---|---|---|---|---|---|---|---|
| Separator Thickness ($\mu$m) | 14.5 | 14.8 | 14.6 | 14.7 | 14.7 | 14.9 | 15.0 |
| Negative Electrode/-Sepa rator Adhesion (gf/25 mm) | 15.9 | 18.2 | 21.3 | 20.9 | 21.2 | 20.3 | 25.8 |
| Length of Electrolyte Liquid Impregnation after Adhering (mm) | 14.2 | 11.8 | 13.2 | 13.8 | 14.1 | 4.9 | 6.3 |
| Resistance (ohm) | 0.83 | 0.82 | 0.84 | 0.79 | 0.77 | 1.04 | 0.89 |
| Aspect Ratio | 0.96 | 0.98 | 0.99 | 0.88 | 0.84 | 0.98 | Unable to Specify |
| $I_{functional\ group}/I_{porous\ polymer\ substrate}$ | n.d | n.d | n.d | n.d | n.d | n.d | 0.3 |

[Short Axis of Particle-Type Binder] The short axis of the particle-type binder used in each of Examples 1 to 5 was determined by cutting a cross-section of the separator, obtaining an image through observing the cut cross-section using a scanning electron microscope (SEM), and then averaging the measured lengths.

[Separator Thickness]

The coated separator was cut to a size of 50 mm×50 mm using a die-cutting machine, and then the thickness was measured using VL-50S-B of MITUTOYO Corporation. Five points were measured per sample, and an average value thereof was reported.

[Adhesion]

The coated separator (25 mm width×13 cm length) and the electrode were placed between sheets of A4 paper, and adhered to each other by being pressed for 10 seconds at a temperature of 60°C and a pressure of 1000 kgf using a heat press device. The adhered electrode and separator were peeled off by applying force in a 180° direction using a UTM device to measure electrode adhesion of the separator.

10

[Length of Electrolyte Liquid Impregnation after Adhering]

The coated separator (25 mm widthx13 cm length) and the electrode were placed between sheets of A4 paper, and adhered to each other by being pressed for 10 seconds at a temperature of 60°C and a pressure of 1000 kgf using a heat press device. The short axis end of the laminated separator/electrode sample was impregnated with an electrolyte liquid prepared by adding 1 M of lithium salt $LiPF_6$ and 2% by weight of VC to a solvent in which EC and EMC are mixed in a volume ratio of 30:70, and then the distance the electrolyte liquid penetrated was measured after 10 minutes.

[Resistance]

The coated separator was cut using a die-cutting machine to fit the coin cell structure shown below, and then assembled to fit the structure shown below. Herein, the electrolyte liquid was prepared by adding 1 M of lithium salt $LiPF_6$ and 2% by weight of VC to a solvent in which EC and EMC were mixed in a volume ratio of 30:70. Four to five drops of the electrolyte liquid were dropped, the result was introduced to a coin cell compressor, and the cap was completely sealed. After that, the coin cell was aged for 3 hours at room temperature, and then resistance was measured.

**Claims**

1.  A separator for an electrochemical device, the separator comprising:

    a porous layer; and
    an electrode adhesive layer formed on at least one surface of the porous layer,
    wherein the porous layer includes a porous polymer substrate and a porous coating layer formed on at least one surface of the porous polymer substrate,
    the porous coating layer includes a binder polymer and an inorganic filler,
    the electrode adhesive layer includes a particle-type binder in a disk shape with a convex central portion, and
    the particle-type binder has a short axis of 50 nm to 500 nm.

2.  The separator of claim 1, wherein the electrode adhesive layer further includes a swelling agent capable of swelling the particle-type binder.

3.  The separator of claim 2, wherein the swelling ratio of the particle-type binder calculated by the following Equation 1 ranges from 120% to 500%:

$$[Equation\ 1]$$

$$swelling\ ratio\ (\%) = [weight\ after\ swelling]/[initial\ weight] \times 100.$$

4.  The separator of claim 2, wherein the swelling agent includes a linear carbonate-based compound, a cyclic carbonate-based compound, an ester-based compound, or two or more thereof.

5.  The separator of claim 2, wherein the swelling agent is solid or liquid at room temperature.

6.  The separator of claim 2, wherein the swelling agent has solubility of 10 g/100 mL or greater in water.

7.  The separator of claim 2, wherein the swelling agent is ethylene carbonate (EC), dimethyl carbonate (DMC) or a mixture thereof.

8.  The separator of claim 1, wherein the particle-type binder polymer includes a polyvinylidene fluoride (PVdF)-based polymer, a styrene-butadiene-based polymer, an acrylic polymer, or two or more thereof.

9.  The separator of claim 1, wherein the porous layer has a surface contact angle of 30 degrees or less with water.

10. The separator of claim 1, wherein the particle-type binder is not substantially present on the surface of the porous polymer substrate.

11. The separator of claim 1, wherein the surface of the porous polymer substrate has a peak area ratio of 0.1 or less, and the peak area ratio is calculated according to the following Equation 2:

$$[\text{Equation 2}]$$

$$\text{peak area ratio} = I_{\text{functional group}} / I_{\text{porous polymer substrate}}$$

In Equation 2, $I_{\text{porous polymer substrate}}$ represents an area of the peak for the SP3 C-H bond in an IR spectrum for the surface of the porous polymer substrate, and

$I_{\text{functional group}}$ represents an area of the peak for a region representing a specific bond present in the particle-type binder polymer in an IR spectrum for the surface of the porous polymer substrate, and the peak corresponds to a peak of the IR spectrum for the electrode adhesive layer component present on the surface of the porous polymer substrate.

12. An electrochemical device comprising:

a positive electrode;
a negative electrode; and
a separator interposed between the positive electrode and a negative electrode,
wherein the separator is the separator of any one of claims 1 to 11.

13. The electrochemical device of claim 12, which is a lithium secondary battery.

FIG. 1

FIG. 2

## INTERNATIONAL SEARCH REPORT

| International application No. |
|---|
| **PCT/KR2024/008921** |

| A. | CLASSIFICATION OF SUBJECT MATTER |
|---|---|

**H01M 50/46**(2021.01)i; **H01M 50/446**(2021.01)i; **H01M 50/449**(2021.01)i; **H01M 50/414**(2021.01)i; **H01M 50/411**(2021.01)i; **H01M 50/443**(2021.01)i; **H01M 10/052**(2010.01)i

According to International Patent Classification (IPC) or to both national classification and IPC

| B. | FIELDS SEARCHED |
|---|---|

Minimum documentation searched (classification system followed by classification symbols)

H01M 50/46(2021.01); H01M 10/02(2006.01); H01M 10/052(2010.01); H01M 10/0525(2010.01); H01M 4/14(2006.01); H01M 50/409(2021.01); H01M 50/446(2021.01); H01M 50/449(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기화학 소자(electrochemical device), 분리막(separator), 다공성 코팅층(porous coating layer), 접착층(adhesive layer), 입자형 바인더(particulate binder)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2020-0078416 A (LG CHEM, LTD.) 01 July 2020 (2020-07-01)<br>See paragraph [0001]; and claims 1 and 4. | 1,8-9,12-13 |
| A | | 2-7,10-11 |
| Y | KR 10-2020-0140637 A (SAMSUNG SDI CO., LTD.) 16 December 2020 (2020-12-16)<br>See paragraphs [0119] and [0124]; and claim 17. | 1,8-9,12-13 |
| Y | KR 10-0754746 B1 (LG CHEM, LTD.) 03 September 2007 (2007-09-03)<br>See claim 1. | 9 |
| A | KR 10-2023-0050168 A (LG ENERGY SOLUTION, LTD.) 14 April 2023 (2023-04-14)<br>See paragraphs [0064]-[0124]; and figures 2-3. | 1-13 |
| A | KR 10-2017-0129643 A (SAMSUNG SDI CO., LTD.) 27 November 2017 (2017-11-27)<br>See paragraphs [0016]-[0148]; and figures 1-2. | 1-13 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 October 2024** | **29 October 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

| International application No. |
|---|
| **PCT/KR2024/008921** |

| Patent document cited in search report | | | Publication date (day/month/year) | Patent family member(s) | | | Publication date (day/month/year) |
|---|---|---|---|---|---|---|---|
| KR | 10-2020-0078416 | A | 01 July 2020 | None | | | |
| KR | 10-2020-0140637 | A | 16 December 2020 | CN | 112054150 | A | 08 December 2020 |
| | | | | CN | 112054150 | B | 28 February 2023 |
| | | | | EP | 3748730 | A1 | 09 December 2020 |
| | | | | EP | 3748730 | B1 | 24 August 2022 |
| | | | | KR | 10-2416526 | B1 | 01 July 2022 |
| | | | | US | 11764441 | B2 | 19 September 2023 |
| | | | | US | 2020-0388808 | A1 | 10 December 2020 |
| | | | | US | 2024-0006717 | A1 | 04 January 2024 |
| KR | 10-0754746 | B1 | 03 September 2007 | BR | PI0808258 | A2 | 08 July 2014 |
| | | | | BR | PI0808258 | A8 | 31 October 2017 |
| | | | | BR | PI0808258 | B1 | 12 November 2019 |
| | | | | CN | 101542779 | A | 23 September 2009 |
| | | | | CN | 101542779 | B | 08 August 2012 |
| | | | | EP | 2132807 | A1 | 16 December 2009 |
| | | | | EP | 2132807 | B1 | 18 December 2013 |
| | | | | EP | 2693530 | A2 | 05 February 2014 |
| | | | | EP | 2693530 | A3 | 30 November 2016 |
| | | | | EP | 2693530 | B1 | 04 July 2018 |
| | | | | EP | 2698844 | A2 | 19 February 2014 |
| | | | | EP | 2698844 | A3 | 30 November 2016 |
| | | | | EP | 2698844 | B1 | 26 December 2018 |
| | | | | EP | 3457461 | A1 | 20 March 2019 |
| | | | | EP | 3457461 | B1 | 27 November 2019 |
| | | | | EP | 3611780 | A1 | 19 February 2020 |
| | | | | EP | 3611780 | B1 | 05 May 2021 |
| | | | | EP | 3832788 | A1 | 09 June 2021 |
| | | | | EP | 3832788 | B1 | 01 May 2024 |
| | | | | EP | 4366069 | A2 | 08 May 2024 |
| | | | | EP | 4366069 | A3 | 07 August 2024 |
| | | | | HU | E043131 | T2 | 29 July 2019 |
| | | | | HU | E048657 | T2 | 28 September 2020 |
| | | | | HU | E055218 | T2 | 29 November 2021 |
| | | | | JP | 2010-520095 | A | 10 June 2010 |
| | | | | JP | 4694641 | B2 | 08 June 2011 |
| | | | | PL | 2698844 | T3 | 28 June 2019 |
| | | | | PL | 3457461 | T3 | 01 June 2020 |
| | | | | PL | 3611780 | T3 | 02 November 2021 |
| | | | | RU | 2009136983 | A | 20 April 2011 |
| | | | | RU | 2460177 | C2 | 27 August 2012 |
| | | | | TW | 200913352 | A | 16 March 2009 |
| | | | | TW | I377720 | B | 21 November 2012 |
| | | | | US | 2009-0246613 | A1 | 01 October 2009 |
| | | | | US | 7695870 | B2 | 13 April 2010 |
| | | | | WO | 2008-108583 | A1 | 12 September 2008 |
| KR | 10-2023-0050168 | A | 14 April 2023 | CA | 3210567 | A1 | 13 April 2023 |
| | | | | CN | 117063344 | A | 14 November 2023 |
| | | | | EP | 4274015 | A1 | 08 November 2023 |
| | | | | JP | 2024-504665 | A | 01 February 2024 |
| | | | | KR | 10-2608232 | B1 | 29 November 2023 |

Form PCT/ISA/210 (patent family annex) (July 2022)

## INTERNATIONAL SEARCH REPORT
### Information on patent family members

International application No.

**PCT/KR2024/008921**

| Patent document cited in search report | Publication date (day/month/year) | Patent family member(s) | | | Publication date (day/month/year) |
|---|---|---|---|---|---|
| | | US | 2023-0361430 | A1 | 09 November 2023 |
| | | WO | 2023-058998 | A1 | 13 April 2023 |
| KR 10-2017-0129643 A | 27 November 2017 | CN | 107394087 | A | 24 November 2017 |
| | | CN | 107394087 | B | 21 September 2021 |
| | | CN | 108963148 | A | 07 December 2018 |
| | | CN | 108963148 | B | 29 October 2021 |
| | | CN | 110651381 | A | 03 January 2020 |
| | | CN | 110651381 | B | 17 May 2022 |
| | | EP | 3246969 | A1 | 22 November 2017 |
| | | EP | 3246969 | B1 | 12 December 2018 |
| | | EP | 3627587 | A1 | 25 March 2020 |
| | | EP | 3627587 | B1 | 19 July 2023 |
| | | JP | 2017-208343 | A | 24 November 2017 |
| | | JP | 2020-521278 | A | 16 July 2020 |
| | | JP | 6802392 | B2 | 16 December 2020 |
| | | JP | 7097674 | B2 | 08 July 2022 |
| | | KR | 10-2017-0129637 | A | 27 November 2017 |
| | | KR | 10-2017-0129638 | A | 27 November 2017 |
| | | KR | 10-2017-0129639 | A | 27 November 2017 |
| | | KR | 10-2017-0129640 | A | 27 November 2017 |
| | | KR | 10-2017-0129641 | A | 27 November 2017 |
| | | KR | 10-2017-0129642 | A | 27 November 2017 |
| | | KR | 10-2017-0129644 | A | 27 November 2017 |
| | | KR | 10-2017-0129645 | A | 27 November 2017 |
| | | KR | 10-2041591 | B1 | 06 November 2019 |
| | | KR | 10-2041592 | B1 | 06 November 2019 |
| | | KR | 10-2071381 | B1 | 30 January 2020 |
| | | KR | 10-2071382 | B1 | 30 January 2020 |
| | | KR | 10-2071383 | B1 | 30 January 2020 |
| | | KR | 10-2071384 | B1 | 30 January 2020 |
| | | KR | 10-2071386 | B1 | 30 January 2020 |
| | | KR | 10-2071387 | B1 | 30 January 2020 |
| | | KR | 10-2138821 | B1 | 28 July 2020 |
| | | US | 10840493 | B2 | 17 November 2020 |
| | | US | 11312871 | B2 | 26 April 2022 |
| | | US | 11535763 | B2 | 27 December 2022 |
| | | US | 11584861 | B2 | 21 February 2023 |
| | | US | 2017-0338461 | A1 | 23 November 2017 |
| | | US | 2018-0337381 | A1 | 22 November 2018 |
| | | US | 2020-0119323 | A1 | 16 April 2020 |
| | | WO | 2018-212566 | A1 | 22 November 2018 |

Form PCT/ISA/210 (patent family annex) (July 2022)

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230082152